# EUROPEAN PATENT APPLICATION

(11) **EP 1 886 944 A2**
(43) Date of publication of application: **13.02.2008**
(21) Application number: 07113579.2
(22) Date of filing: 01.08.2007
(51) Int. Cl.: B65G 47/08

(54) **System for supplying articles to a boxing machine**

(30) Priority: 08.08.2006 IT BO20060595
(71) Applicant: MARCHESINI GROUP S.p.A., 40065 Pianoro (Bologna) (IT)
(72) Inventor: Monti, Giuseppe, 40065 Pianoro (Bologna) (IT)
(74) Representative: Dall'Olio, Giancarlo

(57) **Abstract**

A system (1) for supplying a boxing machine (M) with articles (2) picked up from an article feeding line, situated upstream of said machine (M), and aimed at being introduced into corresponding boxes (3) carried by a respective box conveying line (30) of the same machine (M). The supplying system (1) includes: at least two sets (11, 12) of compartments (10) arranged along a close-loop path, which extends between the article feeding line and the box conveying line (30), with the sets (11, 12) of compartments (10) mutually distanced according to dynamically variable values. At least two operating groups (110, 120) are associated respectively to the sets (11, 12) of compartments (10) and determine the independent forward movement of each of them along the path (P), according to dynamically variable parameters. Control means drive the operating groups (110, 120) alternately in accordance with the motion mode of the article feeding line, when the sets (11, 12) are in a loading station (S1) and in accordance with the box conveying line (30) motion mode, when the sets (11, 12) are in the introduction station (S2) and must be synchronized with the other line.

## Description

The invention relates to automatic machines for packaging articles, known as boxing machines.

Known boxing machines include a magazine, which contains stacked, flat folded tubular blanks, which are picked up one by one, erected to obtain corresponding open boxes, and eventually introduced into a box conveying line, which extends beside an article conveying line, in reciprocal step relation.

The article conveying line, in turn, receives the articles from a loading station, situated upstream, and sends them toward a box filling station, situated downstream, in a portion, in which the article conveying line and the box conveying line are placed side by side.

Pusher means operate in the box filling station to move laterally the articles into the corresponding boxes.

In stepwise operated boxing machines, the pusher means are operated only crosswise to the conveying lines, in step relation to the contemporary stop of both lines.

On the other side, in the continuously operated boxing machines, the pusher means are operated also longitudinally, in synchrony with the conveying lines forward movement, so that the article can be transferred laterally at a zero-speed relative to the conveying lines, as well as to the boxes.

The need of synchronizing the two conveying lines, carrying articles and boxes, implies a functional bind in the article loading station, upstream of the relevant conveying line, due to the necessity of synchronizing this latter conveying line with a possible article feeding line.

Actually, it can happen that the article feeding line is operated continuously, whereas the conveying line of the boxing machine must be operated stepwise, or vice-versa.

Moreover, it can happen that, in spite of the fact that both lines, for feeding articles and for conveying them, are operated stepwise or continuously, they move with two different speeds, which must be set to fit with each other.

As it is known to those skilled in the field, the speed difference must always give an advantage to the boxing machine, that is to say, the boxing machine must be capable of processing more articles than the article feeding line can supply, in order to avoid jamming.

In order to interface the article feeding line with the conveying line of the boxing machine, it is often necessary to insert a particular intermediate conveyor, known as "synchro-dynamic" conveyor, whose peculiarity lies in the fact that it can move in different ways at the inlet with respect to the outlet.

The "synchro-dynamic" conveyor includes at least two sets of compartments, arranged along the conveyor path, suitably distanced from each other and operated independently from each other, by respective motors and driving means.

According to the above mentioned constructive solution, a first set of compartments, situated upstream, closer to the articles feeding line, are moved in accordance with the latter, whereas the other group of compartments, situated downstream, are moved in synchrony with the boxing machine conveying line.

Obviously, it is necessary to have not only the intermediate conveyor, but also means, situated upstream and downstream thereof, for transferring articles from one line to the other one.

The presence of the "synchro-dynamic" conveyor and the associated transferring means involves an expense, caused mainly by the costs of the transferring means, as well as by the cost of the associated control devices, and determines a dimension increase, with all the resulting disadvantages.

Obviously, the increase of the number of devices and operation steps, to which the articles are subjected, increases the possibility of malfunctions and jams, which in turn contribute to rising the costs.

Therefore, the object of the present invention is to propose a system for supplying articles to boxing machines, such that it can adapt itself contemporarily in accordance with the operation ways of the article feeding line, situated upstream, and the box conveying line, situated downstream, which allows to avoid intermediate conveyors.

Another object of the invention relates to the reduction of costs necessary for operatively connecting a production line with a boxing machine, either direct costs, by reducing the number of indispensable elements, or indirect costs, by reducing possible malfunctions.

A further object of the invention is to propose a system, which can process articles of different sizes, comprised in a selected range, without the necessity for any components to be replaced.

The characteristic features of the invention will be pointed out in the following description of preferred embodiments of the proposed system, in accordance with the contents of the claims and with the help of the enclosed drawings, in which:

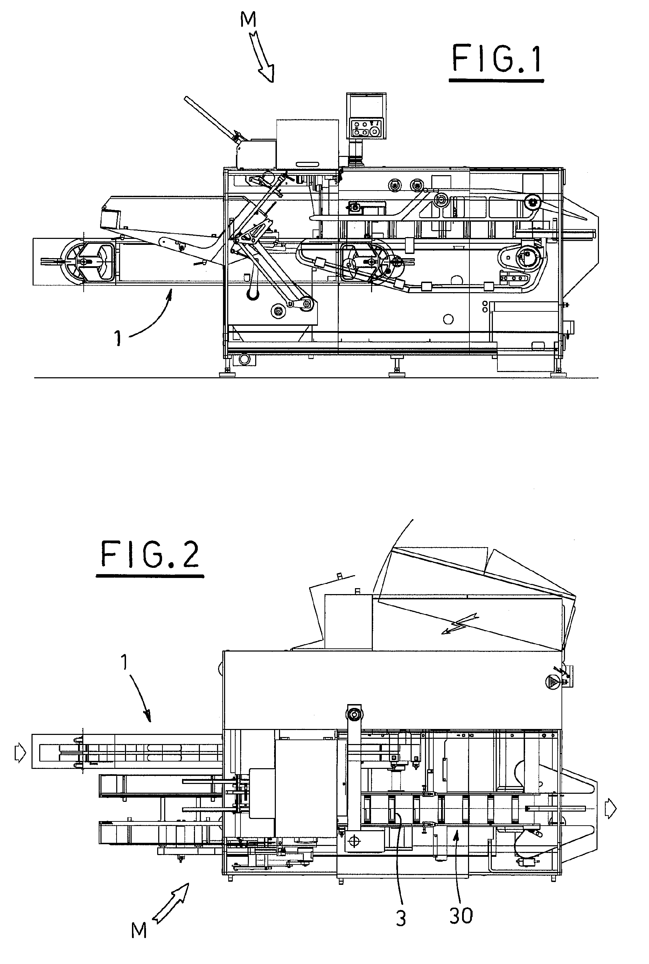

- Figure 1 shows a lateral view of a boxing machine, equipped with the proposed system;
- Figure 2 shows a top view of the machine of Figure 1;
- Figure 3 shows a lateral view of the proposed system, according to a first embodiment;
- Figure 4 shows a top view of the system of Figure 3;
- Figure 5 shows a perspective view of a detail of the system of Figure 3;
- Figure 6 shows a lateral, schematic view of the system, according to a second embodiment;
- Figures 7A, 7B, 7C show enlarged views, taken along respective lines A-A, B-B, C-C of Figure 6;
- Figure 8 shows a lateral, schematic view of the system, according to a third embodiment;
- Figure 9 is a partial view, similar to Figure 8, with the system set to a different size adjustment;
- Figures 10A, 10B, 10C, 10D are enlarged views, taken along respective sections A-A, B-B, C-C of Figure 8.

Having regard to the above mentioned Figures, reference sign M indicates a boxing machine, substantially known, which incorporates the supplying system 1 proposed by the present invention.

The boxing machine M is aimed at introducing articles 2, supplied by an article feeding line, situated upstream and not shown, into corresponding boxes 3, erected and placed on a relevant conveying line 30 of the same machine M.

The supplying system 1 extends from a loading station S1, situated upstream and at the end of said article feeding line, to an introduction station S2, situated downstream, in the section in which the system 1 is set beside the box conveying line 30.

Transferring means, not shown as not relevant to the invention, are situated in the loading station S1 and are operated in step relation with the article feeding line to pick up the articles 2 at the outlet of the latter, and to introduce them into the supplying system 1.

Known pusher means (likewise not shown in detail), operate in the introduction station S2 for transferring sidewise the articles 2 to the corresponding box 3; if the box conveying line 30 is operated stepwise, the pusher means are moved only crosswise and act in step relation with the line 30 stop, otherwise, if the box conveying line 30 is operated continuously, the pusher means are moved also longitudinally, in synchrony with the same line 30 forward movement.

The supplying system 1 is capable of synchronizing itself contemporarily with the article feeding line and the transferring means of the loading station S1 upstream, and with the box conveying line 30 and the respective pusher means, downstream.

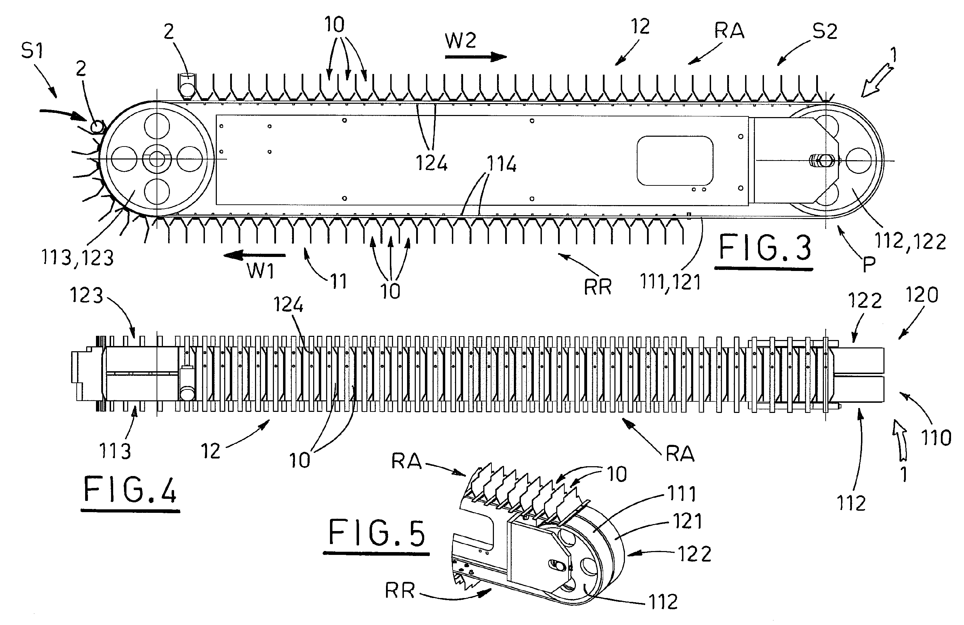

According to a first embodiment (Figures 3, 4, 5), the supplying system 1 includes two sets 11, 12 of compartments 10, arranged along a close-loop path P, which defines an upper, forward run RA and a lower, return run RR.

The sets 11, 12 of compartments 10 are mutually spaced apart according to values, which vary dynamically from a minimum to a maximum, in relation to the system operation, as described in the following.

Each set 11, 12 of compartments 10 has, associated thereto, its own operating group 110, 120, including a toothed belt 111, 121, to which the relevant set 11, 12 is removably fastened. The belt 111, 121 is mounted on a pair of relative pulleys, respectively driving pulley 112, 122 and driven pulley 113, 123, operated by a corresponding electronically controlled motor (not shown) like brushless or stepper motor.

The driving pulleys 112, 122 and the driven pulleys 113, 123 are arranged respectively in coaxial relation, therefore the toothed belts 111, 121 are arranged one beside the other, extending along the same path P; the two sets 11, 12 of compartments 10 are longitudinally aligned by using coupling means 114, 124 (not shown in detail), suitably asymmetrical.

The coupling means 114, 124 are preferably fast-connection couplings, so as to allow a rapid substitution of the sets 11, 12 of compartments 10, when the article 2 size changes.

The supplying system 1 includes also a control device, for example PLC or similar, not shown in detail, aimed at controlling the operating groups 110, 120 in accordance with the motion of the article feeding line and of the box conveying line 30.

Therefore, in order to receive articles 2 coming from the article feeding line, each set 11, 12 of compartments 10, when situated in the loading station S1, is moved continuously or stepwise (arrow W1), in accordance to the motion kind of the article feeding line; afterwards, when the sets 11, 12 reach the introduction station S2, they take the motion, continuous or stepwise (arrow W2), of the box conveying line 30, so as to be synchronized therewith and allow the pusher means to transfer sidewise the articles 2 to the corresponding boxes 3.

Obviously, as it can be deduced from Figures, at the same time, one set can be operated in accordance to the article feeding line and the other set in accordance with the box conveying line 30.

As it has already been said in the introductory note, it is necessary for the boxing machine M, independently from the operation mode of the box conveying line 30, to have a higher throughput than the articles supply of the article feeding line upstream, so as to avoid jamming; in extreme conditions, the set of compartments 10 in loading step can reach the very rear of the set in the introduction station S2, on the forward run RA, and likewise the set passing through the introduction station S2 can reach the very rear of the one in the loading station S1, on the return run RR.

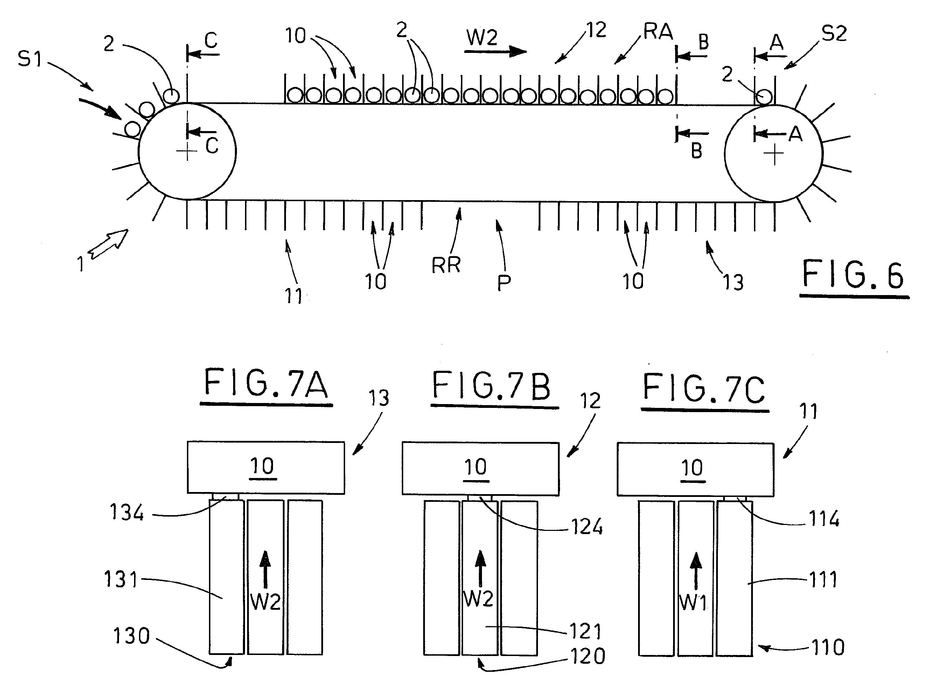

According to a second embodiment, the supplying system 1 (Figures 6, 7A, 7B, 7C) has three sets 11, 12, 13 of compartments 10, which are arranged along the close-loop path P, and each of which has its own operating group 110, 120, 130, entirely similar to the one described in relation to the first embodiment.

Each set 11, 12, 13 is removably fastened to a respective toothed belt 111, 121, 131 by corresponding coupling means 114, 124, 134, suitably placed, so as to maintain the longitudinal alignment of the compartments 10 of each set 11, 12, 13 (Figures 7A, 7B, 7C).

The system operation is analogous to the one described above in relation to the two sets, situated respectively in the loading station S1 and in the introduction station S2, while the remaining set of compartments is operated in a more appropriate way, depending on whether they are in the forward run RA (Figure 6), or in the return run RR.

The second embodiment can be advantageous, when the forward run RA and the return run RR of the path P are very long or when the sets of compartments are not very extended with respect to the path, so as to avoid excessive acceleration and deceleration along the intermediate sections between the stations.

Obviously, other embodiments are possible, with more than three sets of compartments, as many as allowed by the dimensions of the relative operating groups.

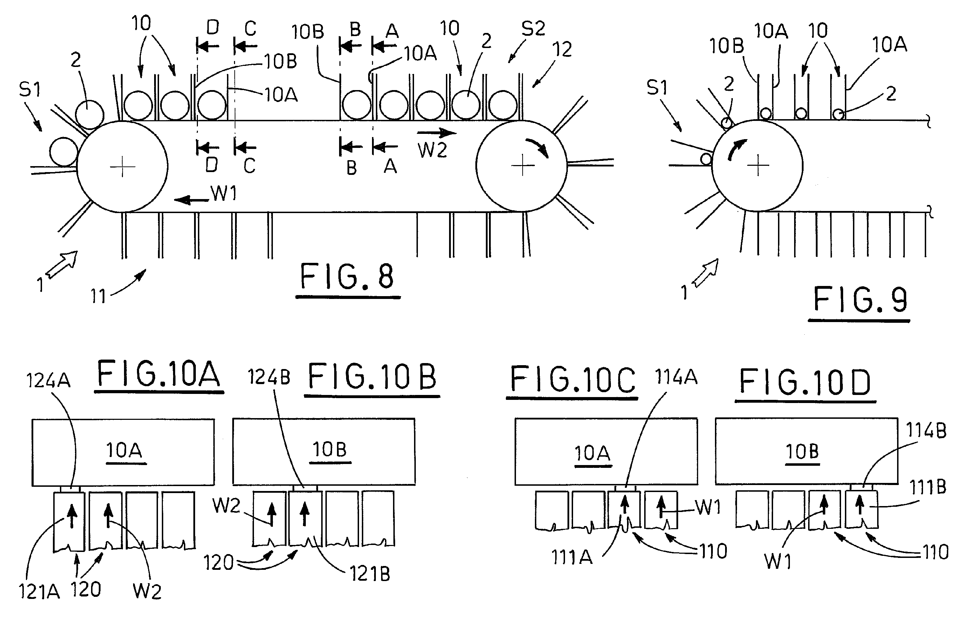

According to a third embodiment of the supplying system 1, the width of the compartments 10 of each set 11, 12 varies from a maximum one (Figure 8) to a minimum one (Figure 9), so as to match the article 2 size, within a prefixed range.

This feature is obtained by using compartments 10, whose fore walls 10A are disengaged from the relative rear walls 10B, and by suitably modified operating groups 110, 120, each of them including two toothed belts 111A, 111B and 121A, 121B abreast, tightened between the relative pulleys.

The fore walls 10A of the compartments 10 are connected to the first toothed belts 111A, 121A of each set 11, 12 by corresponding first coupling means 114A, 124A (Figures 10A, 10C), while the rear walls 10B are connected to the second toothed belts 111B, 121B by respective second coupling means 114B, 124B (Figures 10B, 10D).

During the supplying system 1 operation, the pulleys of the first and second toothed belt of each set 11, 12 are mutually bound, so that the compartments 10 maintain the prefixed longitudinal dimension and the respective operation group 110, 120 can operate the set 11, 12, according to its movement mode.

In order to adjust the compartments 10 size, with the supplying system not in operation, the pulleys of the first toothed belts 111A, 121A of each set 11, 12 are disengaged from the corresponding pulleys of the second toothed belts 111B, 121B and rotated with respect thereto, in one direction or the other, in order to increase or otherwise decrease the compartments 10 size.

The size adjustment is performed in two steps, by acting first on one set of compartments and then on the other.

In practice, the above described supplying system 1 proposes the operation principle of an intermediate "synchro-dynamic" conveyor, which has been discussed in the introductory note and which thus can adapt contemporarily to the operation mode of the means upstream and downstream, which results in the advantage of having this feature directly on the boxing machine.

Firstly it allows to eliminate the traditional article conveying line, which is normally set on the boxing machine, which results in cost reduction, and secondly, it allows to obtain a very versatile boxing machine, capable of step related operation with other machines situated upstream, without any interface devices.

Further saving derives from the fact that the interface devices, for example the "synchro-dynamic" conveyors described in the prior art, require contextual presence of handling means, which are capable of transferring the articles from one line to another; the proposed solution eliminates one of said manipulating means and all the necessary additional control means.

The handling is simplified, since it is integrated into the internal handling of the boxing machine and further, the probability of jams and/or malfunctions is reduced, since the articles are subjected to less operation steps.

Another, not less important advantage derives from the fact that the proposed supplying system allows to reduce the dimensions with respect to the known solutions, which include an intermediate conveyor.

Finally, it is certainly convenient to obtain a system with variable compartment size, which further increases the operation flexibility of the boxing machine.

## Claims

1. System for supplying a boxing machine with articles (2) picked up from an article feeding line situated upstream of said machine (M), with said articles (2) being designed to be introduced into corresponding boxes (3) carried by a respective box conveying line (30) of the same machine (M), **characterized in that** it includes: at least two sets (11, 12) of compartments (10) arranged along a close-loop path (P), which extends between said article feeding line and box conveying line (30), with said sets (11, 12) of compartments (10) mutually distanced according to dynamically variable values; at least two operating groups (110, 120), associated respectively to said sets (11, 12) of compartments (10), and determining the independent forward movement of each of them along said path (P), according to dynamically variable parameters; control means, which control the operating groups (110, 120) alternately in accordance with the motion modes of the article feeding line and of the box conveying line (30).

2. Supplying system, according to claim 1, **characterized in that** said close-loop path (P) defines: an upper forward run (RA) for conveying said articles (2) from a loading station (S1), situated upstream, to an introduction station (S2), situated downstream, in which the path (P) is set partially beside said box conveying line (30); a lower return run (RR) for returning said sets (11, 12) of empty compartments (10) from the introduction station (S2) to the loading station (S1).

3. Supplying system, according to claim 1, **characterized in that** the compartments (10) of said sets (11, 12) are longitudinally aligned.

4. Supplying system, according to claim 1, **characterized in that** said operation groups (110, 120) are situated one beside the other, with each of them including an electronically controlled motor for operating corresponding transmission means (111, 121, 112, 122, 113, 123) removably connected to the respective sets (11, 12) of compartments (10).

5. Supplying system, according to claim 4, **characterized in that** said transmission means include, for each of said operation groups (110, 120), a toothed belt (111, 121), mounted on a pair of pulleys, respectively driving pulley (112, 122) and driven pulley (113, 123), with said toothed belt (111, 121) having coupling means (114, 124) for coupling removably with the corresponding set (11, 12) of compartments (10).

6. Supplying system, according to claims 4 and 5, **characterized in that** said driving pulleys (112, 122) and driven pulleys (113, 123) are respectively set in coaxial relation and **in that** said coupling means (114, 124) couple with a corresponding set (11, 12) of compartments (10) in asymmetrical position.

7. Supplying system, according to claim 1, **characterized in that** the width of the compartments (10) of each of said set (11, 12) varies from a minimum to a maximum, in accordance with the articles (2) size.

8. Supplying system, according to claim 7, **characterized in that** each of said operation groups (110, 120), associated to said sets (11, 12) have double transmission means, fastened respectively to fore walls (10A) and rear walls (10B) of said compartments (10), with said double transmission means being bound to each other during system (1) operation and disengaged, when the system (1) is stopped, to allow adjustment of the distance between said fore walls (10A) and rear walls (10B) of said compartments (10).

9. Supplying system, according to claim 8, **characterized in that** each of said double transmission means includes first toothed belts (111A, 121A), beside respective second toothed belts (111B, 121B), mounted on respective driving and driven pulleys, with said first toothed belts (111A, 121A) having corresponding first coupling means (114A, 124A) for coupling removably with the fore walls (10A) of the compartments (10) of the corresponding set (11, 12), and with the second belts (111B, 121B) having respective second coupling means (114B, 124B) for coupling removably with said rear walls (10B) of the compartments (10) of the corresponding set (11, 12).

10. Supplying system, according to claim 9, **characterized in that** said driving and driven pulleys are respectively set in coaxial relation and **in that** said coupling means (114A, 124A, 114B, 124B) couple with the corresponding walls (10A, 10B) in asymmetrical positions.

11. Supplying system, according to claims 8 or 9, **characterized in that** it includes means, operated when the system (1) is stopped, to adjust simultaneously the distance between said fore walls (10A) and rear walls (10B) of said compartments (10).
